# EUROPEAN PATENT SPECIFICATION

(11) **EP 3 475 050 B1**
(45) Date of publication and mention of the grant of the patent: **29.04.2020**
(21) Application number: 16733059.6
(22) Date of filing: 27.06.2016
(51) Int. Cl.: B29C 48/355, B29C 48/53, B29C 55/18, B29C 55/06

(54) **PLANT COMPRISING A TWIN-SCREW EXTRUDER FOR THE CONTINUOUS PRODUCTION OF ROLLS OF PLASTIC STRETCH FILM**
RECKFOLIENANLAGE MIT DOPPELSCHNECKENEXTRUDER
INSTALLATION D'ETIRAGE DE FEUILLE AVEC EXTRUSION DIRECTE

(43) Date of publication of application: 01.05.2019
(73) Proprietor: COLINES AIR BUBBLE S.r.l., 28060 Nibbia-San Pietro Mosezzo (NO) (IT)
(72) Inventor: MENCARELLI, Maurizio, 06083 Bastia Umbra (PG) (IT)
(74) Representative: Martegani, Franco
(86) International application number: PCT/EP2016/064818
(87) International publication number: WO 2018/001447

(56) References cited:
- WO-A2-2009/141726
- US-A1- 2009 227 782
- Zihao Hong: "Lab Precise Twin Screw Cast Film Extrusion and MDO Line formal", YouTube , 25 November 2013 (2013-11-25), XP054977073, Retrieved from the Internet: URL:https://www.youtube.com/watch?v=-f0Zhd hJrlI [retrieved on 2017-01-17]
- John R. Wagner Jr.: "Multilayer Flexible Packaging", 2010, Elsevier Inc, Burlington, MA 01803 USA, XP002766085, ISBN: 978-0-8155-2021-4 page 232, page 232; figures 16-3
- Anonym: "refreshing extrusion technology", LEISTRITZ EXTRUSIONSTECHNIK GMBH , 17 December 2014 (2014-12-17), pages 1-12, XP002766086, Nürnberg, Germany Retrieved from the Internet: URL:http://www.machine-building.eu/extrusi on/de/00_pdf/2015_01%20FOLIEN_D%20mail.pdf [retrieved on 2017-01-18]
- ShinKwangEng: "Stretch Wrap Cast Film.avi", youtube, 27 January 2013 (2013-01-27), XP054977076, Retrieved from the Internet: URL:https://www.youtube.com/watch?v=jmKy7A ipLls [retrieved on 2017-01-17]
- Leistritz Extrusion Technology: "Film Extrusion with twin screw extruders", youtube, 5 February 2016 (2016-02-05), XP054977075, Retrieved from the Internet: URL:https://www.youtube.com/watch?v=jmKy7A ipLls [retrieved on 2017-01-17]

## Description

The present invention relates to a plant for the production, in continuous, of plastic stretch film, optionally multilayer, by means of cast extrusion, starting from the extrusion of granules of one or more polymers, and to the relative production process.

More specifically, the present invention relates to a plant in continuous as defined above, where there is at least one twin-screw extruder for producing at least one of the layers forming the plastic stretch film.

Plastic stretch films, otherwise defined as stretch films, are monolayer or multilayer films normally used for packaging.

The current state of the art provided various sizes of finished rolls of stretch film, in particular three types of rolls destined for different applications: manual, automatic, jumbo.

Manual rolls are suitable for the manual packaging of objects or pallets on the part of an operator who manually winds the film around the product to be packaged. This type of roll has a weight that can range from 1 to 5 kg and is normally wound around a cardboard core having a thickness of 2" and a variable weight, but at times it may also be wound around cardboard cores having a thickness of 3", as is the case, for example, of North American markets.

Automatic rolls are rolls that are typically used in automatic machines for the winding of pallets, they have a weight that can vary from 12 to 25 kg and are typically wound in cardboard cores having a thickness of 3" and a variable weight.

Finally, jumbo rolls are rolls destined for a subsequent transformation and re-processing for the production of mini-rolls, or for the production of printed films or simply destined for distribution and subsequent transformation into smaller-sized rolls. They typically have weights varying from 25 to 60 kg and are wound in cardboard cores having a thickness of 3" and a variable weight.

The types of rolls listed above, having a variable weight, format, size and length, are produced in continuous in plants comprising at least one extrusion unit of granules of polymeric materials, in addition to other units such as, for example, cooling and solidification of the melt, thickness control, oscillation, winding, automatic cutting, weighing, discharge and expulsion of the rolls produced.

In particular, the plastic granules of one or more polymers are dosed for feeding one or more single-screw extruders that melt the granules by pressurization: the granules advancing in the channel formed between the screw and cylinder begin to melt and the resulting melt is pressurized as it proceeds towards the outlet mouth as the free space between the screw and cylinder is reduced towards said outlet.

At the outlet of the extruders, the respective high-pressure-melted plastic material is sent onto a flat extrusion die (cast die) from where it exits in fluid form from a thin slit which gives the melt the form of a continuous flat film.

The current market requirement for stretch film is to be able to process increasingly low-quality polymeric raw materials, by attempting to mix different polymers, some of which coming from the recycling of plastic, or using polymers out of specification coming from petrochemical production plants that have a much lower price than first-grade virgin material.

This requirement however is limited in traditional single-screw extruders which do not allow the processing of extremely diverse materials: what typically happens when processing materials that are very different from each other with single-screw extruders is the formation of "gels" or "gel" visible at the outlet of the flat extrusion dies.

These gels or clots are agglomerates of molten/semi-molten material that do not have the same viscosity values with the surrounding film and represent breakage points for the film during the production process. The breakage of the film triggered by these gels prevents the production of the film itself.

Another market requirement of stretch film is to produce stretch film with a reduced thickness, reaching thicknesses in the order of 8-12 microns but also lower, that require a perfect filmability of the raw material and technical characteristics such as toughness and perforation resistance and tensile strength, which are such as to increase the quality of the end-product during its final application.

Filmability means that the melt is capable of being extruded through the flat die (cast die) and passing through a "slit" in the order of a few tens of millimetres, without breaking, thus having mechanical characteristics which allow it to be subsequently stretched.

The molten film, in fact, is stretched (the thinner the final thickness, the greater the stretching will be) from the outlet of the lip of the flat die (cast die) until contact with the chill-roll that rotates at a high velocity, but the same must be prevented from breaking so as not to interrupt the production process.

As can be easily understood, the various requirements are in sharp contrast with each other, and the current state of the art does not allow a film with reduced thicknesses to be produced with low-quality materials that have high mechanical capacities and an excellent filmability.

In particular, in order to produce particularly thin films, it is currently only and exclusively possible to use first-grade raw materials with well-defined mechanical and rheological features, limiting possible choices (of both an economical and technical nature) in the supply of raw materials.

www.youtube.com/watch?v=f0ZhdJrll of Zihao Hong shows a plant for the production of rolls of plastic film according to the preamble of claim 1.

US 2009/0227782 relates to a method for producing cellulose acylate film where is shown a schematic diagram of the structure of an extruder. This extruder has two screws shafts which are disposed in parallel inclined relative each other.

An objective of the present invention is to at least partly overcome the disadvantages of the known art by providing a plant and a method for the continuous production of stretch film, in monoextrusion or coextrusion, also having extremely low thicknesses, starting from engineering polymers, from materials that are not normally used in production processes of stretch film as they are incompatible with other materials but which in any case allow the technical features of the end-product to be considerably increased, or from lower-quality materials with respect to first-grade virgin plastic materials such as, for example, plastic materials coming from recycling or those out of specification coming from production plants.

A further objective is to produce said stretch film using a plant that does not require substantial modifications in the lay-out, and that is simple to manage and implement.

These and other objectives are achieved by the plant according to the invention having the characteristics specified in the enclosed independent claim 1.

Advantageous embodiments of the invention are indicated in the dependent claims.

An object of the present invention relates to the use of at least one twin-screw extruder in a continuous production plant, in monoextrusion or in coextrusion, of rolls of plastic stretch film starting from the extrusion of granules of one or more polymers by means of cast extrusion.

A further object of the present invention relates to a process for the continuous production, in monoextrusion or in coextrusion, of rolls of monolayer or multilayer plastic stretch film, preferably light films with reduced thicknesses, for example less than 5-8 microns, starting from the extrusion of granules of one or more polymers, said process comprising at least the following steps:
(A) extrusion of a thin flat film, monolayer or multilayer, through a flat extrusion die, fed by one (monoextrusion) or various extruders (coextrusion) of said granules wherein at least one of the extruders is a twin-screw extruder;
(B) cooling and solidification of the molten plastic film coming from said flat extrusion die, by contact with at least one chill-roll having a smooth surface and cooled with water, to solidify the film by sudden cooling of the melt;
(C) optional control of the thickness of the solidified stretch film to keep said thickness constant with respect to the width of the stretch film;
(D) optional treatment of the stretch film by oscillation, in order to improve the aesthetical appearance of the rolls of film produced;
(E) winding into rolls comprising the automatic cutting of the stretch film;
(F) discharging and expulsion of the rolls produced.

A further object of the present invention relates to a plant for the continuous production of rolls of plastic stretch film, monolayer or multilayer, starting from the extrusion of granules of one or more polymers, comprising in sequence:
an extrusion unit in cast extrusion (monoextrusion or coextrusion) comprising at least one extruder, preferably two extruders, a flat extrusion head so as to obtain a single plastic stretch film, and optionally respective dosing pumps for feeding said flat die;
a cooling and solidification station of the molten film coming from said flat die, comprising at least one chill-roll, with a smooth surface, suitable for solidifying said film;
an optional control unit of the thickness, preferably by means of X-ray or beta-ray scanning, to control that said thickness is kept constant with respect to the width of said solidified stretch film;
an optional oscillation unit for improving the aesthetical appearance of the rolls of film produced;
one or more winding units into rolls comprising cutting means of the stretch film and weighing means of said rolls,
one or more discharge and expulsion units of the rolls produced,
wherein at least one of the extruders upstream of the flat extrusion die is a twin-screw extruder suitable for having a pressure at the outlet mouth which is such as to fill elements or parts of the plant positioned immediately downstream of said extruder, preferably a pressure which is such as to continuously feed said flat extrusion die, more preferably such as to fill, if present, a respective dosing pump (e.g. gear pump) positioned downstream of said twin-screw extruder.

Said twin-screw extruder preferably has a final section L for the pumping of the molten polymer wherein the profile of the two screws in said section is suitable for generating a pressure at the outlet of the extruder which is such as to feed and fill elements or parts of the plant positioned immediately downstream of said twin-screw extruder, said elements or parts possibly being said flat extrusion die or a respective gear pump, if present, positioned downstream of said twin-screw extruder and upstream of said cast die.

In particular, said twin-screw extruder advantageously has an extremely reduced pumping section L, and also has a free volume between the cylinder and screws, in said section L, which gradually decreases towards the outlet of the extruder.

This design expedient is such as to guarantee a much higher pressure at the outlet of the mouth of the extruder with respect to conventional twin-screw extruders which have so far been used for other purposes, for example for the production of polymer granules, and not for feeding flat extrusion dies.

More specifically, in the twin-screw extruder of the present invention, the free volume between the cylinder and screws, in said section L, decreases towards the outlet of the extruder as the pitch of the screws increases (thickens), the diameter of the screws and cylinder, however, remaining constant in said section L.

In conventional twin-screw extruders, the outlet pressure of the melt is relatively low, and this is why they are not used in the production of flat films that require, on the contrary, a high pressure to be able to be extruded through the thin opening of the flat extrusion die: twin-screw extruders are in fact used for the mixing of two or more polymers, for the production of compounds, masterbatches, for the extrusion/production of foams (PE, PP, XPS foams) and some types of injection presses (moulding), i.e. when a high pressure is not required at the outlet of the mouth of the extruder but, on the contrary, when it must be minimized as much as possible for problems relating to degradation of the product.

Twin-screw extruders therefore allow very diverse materials to be mixed, obtaining at the outlet an almost homogeneous material from a rheological point of view, i.e. the same viscosity, at the same temperature. Furthermore, thanks to the presence of two screws that penetrate each other, the volumetric flow-rate in the twin-screw extruder is more constant with respect to a single-screw extruder.

Known twin-screw extruders consequently allow a better mixing of material to be obtained with respect to that obtained by traditional single-screw extruders and a perfect rheological homogeneity of the outgoing product as the geometry of a twin-screw extruder allows plastic materials to be mixed in its interior more times with respect to the same section of a single-screw extruder.

This greater mixing in the melting phase of the material allows the twin-screw extruder to process mixtures of different materials and with a limited quality, sending out an almost homogeneous melt from a rheological point of view without the presence of gels or imperfections i.e. preventing the formation of clots of plastic material with a different rheology that could cause breakages of the film with a consequent stoppage of the continuous production process.

The insertion of a twin-screw extruder has never been effected, however, in production lines of stretch film as it normally has a pressure at the outlet of the mouth which is generally lower with respect to that necessary for effectively filling the subsequent parts of the plant, for example the flat extrusion die and/or possible dosing gear pumps upstream of said die.

In the section L of the twin-screw extruder according to the invention, defined above, on the other hand, there is a metering of the polymer which is such as to effectively fill the flat extrusion die without excessively degrading the molten polymer: said section L is positioned as close as possible to the outlet mouth of the extruder (end of the cylinder) in order to limit and reduce the possibility of causing degradation phenomena.

In the embodiment described herein (which is non-limiting of the invention), the twin-screw extruder also preferably has, downstream of its mouth, a screen-changer for filtering the material leaving the extruder in order to ensure the total purity and quality of the end-product, which is connected to a dosing pump, if present, which feeds the flat extrusion die. Similar embodiments can have a different sequence of the different elements, or the absence of some of them.

In particular, in order to obtain film through the flat die, the melt must be fed at a high pressure, avoiding an undesired pulsating flow phenomenon that could cause periodical changes in the thickness of the film in the direction of the machine.

Consequently, the twin-screw extruder used in the present plant is advantageously and appropriately modified with respect to known twin-screw extruders so as to always ensure the flow-rate of the molten plastic material necessary for the monoextrusion or coextrusion plant and the final pressure necessary, without however excessively degrading the plastic material, using the smallest possible number of screw diameters (length of the extruder).

It is known from literature that the degradation phenomenon of polymers is linked to mechanical and thermal stress. Mechanical stress is associated with the geometrical features of the screw/cylinder system and the viscosity of the polymer; the latter is strongly influenced by the temperature and pressure on the polymer.

In single-screw extruders, a control of the degradation phenomenon cannot be guaranteed without intervening directly on the pressure on the polymer itself, but this causes a reduction in the flow-rate at a certain pressure of the molten plastic material.

The twin-screw extruder used herein, on the other hand, is suitably modified so as to be able to control, in very specific points of the screw/cylinder system, which are illustrated hereunder, the pressure on the polymer in addition to the shear rate (deformation rate, i.e. change rate in the velocity at which a layer of fluid passes to an adjacent layer) which influences the degradation phenomenon through the stress on the polymer.

In twin-screw extruders, as the geometrical configuration is flexible and the plasticization of the polymer inside the screw/cylinder system can be controlled, it can be asserted that the degradation phenomenon of the polymer is under control, at the same time ensuring the maximum plasticization capacity of mixtures having varying viscosities, guaranteeing the desired pressure at the design flow-rate necessary for feeding the respective dosing pump which feeds the flat extrusion die.

In the formation of stretch film by means of cast extrusion according to the present invention, there must be a considerable pressure at the outlet of the extruder as, after the mouth, the melt must first pass, by means of suitable thermo-regulated pipes ("necks"), through the possible steel filter (screen-changer) and it must then enter and also suitably fill the possible gear pump, which in the plant in question acts as a dosing pump.

This pump has a minimum operating pressure, for example within the range of 20÷80 bar, below which it is impossible to operate, as the pump itself cannot be appropriately filled for being able to feed the flat extrusion die with a correct pressure.

When the stretch film is composed, microscopically, of two or more layers uniformly in contact with each other at the interface over the whole surface of the film, the relative percentages of the single extruders must be accurately controlled, and consequently the layers with respect to the overall flow-rate: as this dosage of the flow-rates is specifically obtained by controlling the revolutions of the dosing pump, it is evident how important it is for the process to have the pump suitably full.

The twin-screw extruder used herein therefore advantageously has a profile of the two screws suitable for generating a pressure at the outlet of the extruder that is such as to continuously feed the flat extrusion die, preferably a pressure which is such as to appropriately fill the gear pump downstream of the same extruder but not so high and uncontrolled as to degrade the polymer with excessive overpressures and/or mechanical and thermal stress.

In particular, in the twin-screw extruder used herein, the section L, in which there is a pressure increase, is established in the design phase: this is achieved by simply varying the geometry of the screws, their positioning along the shaft and their pitch, consequently selecting the starting point of the pumping or pressurization phase of the polymer (starting point of the section L), without having to modify the length of the cylinder or the cylinder itself.

This is not possible in a single-screw extruder due to the fixed geometry of its screw/cylinder system which causes a fixed pressure increase along the whole cylinder, which gives rise to degradation phenomena when non-virgin or engineering polymers are used.

In single-screw extruders, in fact, the pressurization of the polymer takes place as a result of the increase in the screw diameter which occurs towards the outlet, the screw pitch and diameter of the cylinder, however, remaining constant.

This starting point of the pumping of the present twin-screw extruder is obviously as close as possible to the end of the cylinder in order to limit and reduce the possibility of the onset of degradation phenomena.

These aspects therefore allow the use of materials that have not so far been used in the production of stretch film, as their complete mixing was impossible with a standard single-screw extruder. Mixtures of products different from each other can therefore be mixed and become homogeneous, thus imparting different properties to the film produced, also overcoming the current tendency of the state of the art to produce multilayer films each with different materials.

All of this with the possibility of a greater plasticization of the polymeric mixtures with varying viscosities without causing degradation phenomena, as the mixing and plasticization steps take place at lower average pressures than in a single-screw extruder.

In short, it can be asserted that the twin-screw extruder of the present invention advantageously and preferably has a suitably modified final section that acts like the end pumping section of a single-screw extruder.

The twin-screw extruder thus dimensioned can thus be inserted in a plant for the production of stretch film, overcoming the current limitations of the state of the art.

Without being excluded from the scope of the present invention, said twin-screw extruder can be used as the only extruder of a monoextrusion section for forming, by means of cast extrusion, a single-layer plastic stretch film; or it can be used as one or more of the extruders of a coextrusion section necessary for forming, by means of cast extrusion, a multilayer plastic stretch film.

A further consideration should be made with respect to the strictly economic aspects of the invention: more specifically, the high cost of twin-screw extruders with respect to single-screw extruders is balanced by their greater energy efficiency and higher yield in terms of production kilos over screw diameters.

In particular, in order to guarantee a certain flow-rate (in kg/h), single-screw extruders must have larger dimensions (screw diameter) with respect to twin-screw extruders: this allows (keeping the hourly flow-rate of the machine fixed) the size of the twin-screw extruder to be reduced, at the same time reducing the size of the motor that moves it. This leads to an energy saving with a consequent cost saving.

Ultimately, it can be asserted that the cost per kilo of end-product is lower using a machine equipped with a twin-screw extruder, this amortizes the initial higher cost of the twin-screw extruder suitably modified.

Furthermore, the greater capacity of homogenizing plastic materials with different rheological properties, accompanied by a greater energy efficiency with respect to single-screw extruders, allows the choice of raw materials that can be used for the production of particularly light plastic films, to be widened.

In particular, thanks to the use of twin-screw extruders, lower-quality and therefore more economic materials can be favoured, without jeopardizing the correct functioning of the whole plant and the properties of the end-product.

It should be noted that in the present plant, the number of twin-screw extruders provided upstream of the flat extrusion die is not binding for the purposes of the present invention. The number of twin-screw extruders can depend on the configuration to be given to the coextrusion structure of the stretch film.

Further characteristics of the invention will appear more evident from the following detailed description, referring to a purely illustrative and therefore non-limiting constructive form of an embodiment illustrated in the enclosed drawings, in which:
figure 1 is a side view of the complete plant for the production of a stretch film according to the invention;
figure 2 is a plan view of the extrusion section alone of the plant illustrated in figure 1;
figure 3 is an enlarged view of the cooling station inside the rectangle indicated with A in figure 1;
figures 4a-4d are side views of the three sections a), b) c) respectively, that form each screw of the twin-screw extruder, including an overall view (4d) of the screw according to the invention.

In the following description, every reference to *"stretch film"* should be considered as referring to any *"plastic stretch film".*

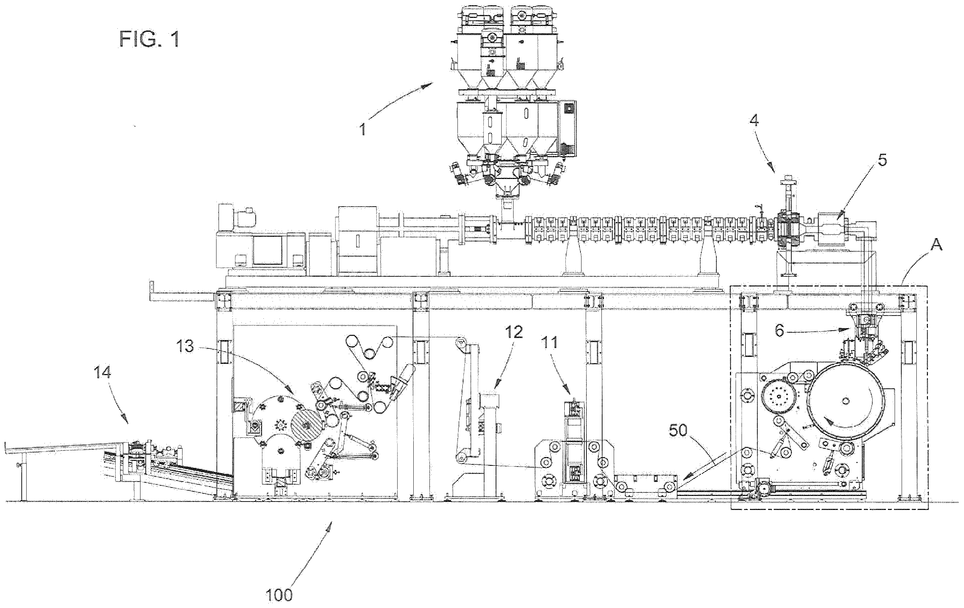

Figure 1 schematically illustrates the complete plant for the production of a plastic stretch film starting from granules, indicated as a whole with the reference number 100.

Said plant 100 comprises, in sequence, an extrusion unit, a cooling and solidification station of the molten film, a control unit of the thickness, an oscillation unit, a winding unit into rolls including cutting means and weighing means, a discharge and expulsion unit of the rolls produced.

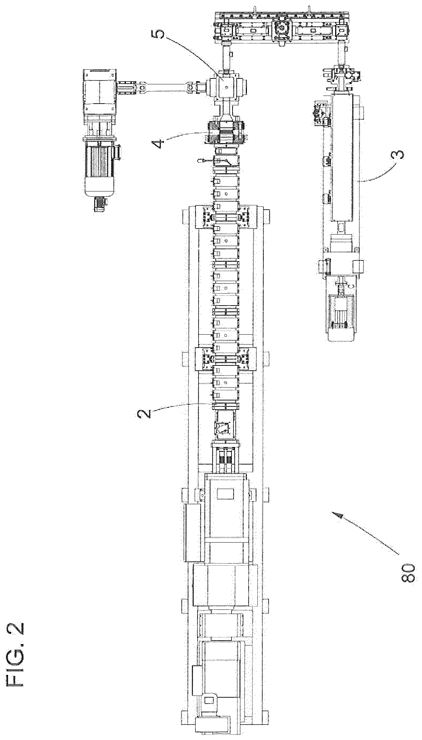

The extrusion unit, indicated as a whole with reference number 80 (figure 2), is positioned upstream with respect to the other units, and in this embodiment, it is positioned at a greater height with respect to the other sections of the plant 100.

Said extrusion unit 80 comprises one or more gravimetric dosing systems 1 for feeding, with granules of polymeric plastic materials, two respective extruders 2 and 3, both positioned downstream of said dosing systems 1.

In particular, the granules are sucked from a storage and then suitably dosed for feeding said extruders 2, 3 so as to have a prefixed weight ratio between the different polymeric materials.

At least two of the two extruders 2, 3 must be a twin-screw extruder 2.

Even if this is not binding for the purposes of the present invention, two extruders are provided in the plant 100 illustrated in figure 1, to allow a two-layer stretch film to be obtained, for example B and C, one of which is generally and preferably an "adhesive" layer capable of sticking to itself and around the objects on which it is wound.

The thickness of said stretch film is therefore composed, microscopically, of two thin layers B and C. For this type of embodiment, one of the two extruders 2,3 is fed with a percentage of materials having a high adhesion capacity such as low and very low density linear polyethylenes (VLLDPE-ULLDPE) and/or various kinds of elastomers, whereas the other extruder is fed with granules of a different polymeric material.

The twin-screw extruder 2 has an end section L (corresponding to the pumping section c of figure 5) having a length within the range of 8÷15 times the screw diameter (D).

It should be noted, however, that in the single-screw extruders currently used in production plants of stretch film with an L/D ratio typically ranging from 28 to 32, where the geometry is designed so as to allow a high pressurization of the melt moved, the pressure at the outlet and above all the stress of the material are much greater.

The granules of polymer are mixed, pressed and then melted inside the twin-screw extruder 2, exiting in the form of a melt from the outlet mouth of the twin-screw extruder 2 for feeding a screen changer 4, and subsequently a dosing gear pump 5 (figure 2) which sends the respective melt to the flat extrusion die 6, possibly passing first, in the case of multilayer film, through a feed-block distributing device already known per se in the film coextrusion technology, whose function is to divide the streams of melt leaving the extruders into the same number of streams as the layers of multilayer stretch film, so as to distribute the various streams of melt in a predetermined sequence of layers being fed to the flat extrusion die.

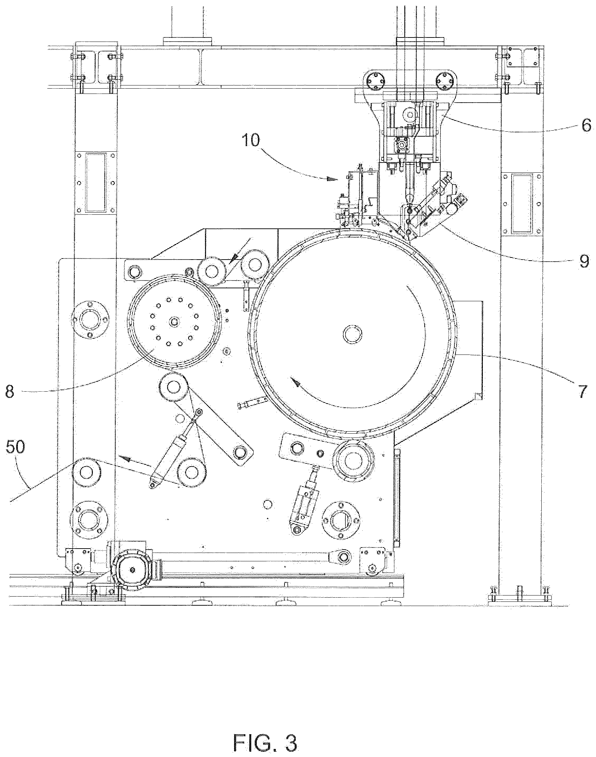

After the two-layer melt has left the respective flat die 6, it passes to the typical solidification section of stretch film: in this step, the melt passes to a cooled stretch film so as to be solid, indicated with reference number 50 in figure 3.

The cooling and solidification unit of the melt indicated in figure 1 inside the box A, comprises (figure 3) a first chill-roll or cooling cylinder 7 positioned immediately downstream of the flat extrusion die 6, and it can comprise a second chill-roll or cooling cylinder 8 for cooling the other side of the film that has not come into contact with the first chill-roll 7.

Said chill-rolls 7,8 have a continuous smooth surface, without bumps, recesses or the like, in order to guarantee surface uniformity of the solidified film. Furthermore, each of said chill-rolls 7,8 is thermoregulated by means of water cooling.

Each of said chill-rolls 7,8 cooperates with one or more idle rolls in order to ensure the complete contact of the film with the respective chill-roll 7,8 in order to avoid non-uniformity of the surface and/or damage to the film.

In correspondence with the contact point of the melt with the first chill-roll 7, a suction chamber is provided, which suitably generates a depression between the smooth surface of the first chill-roll 7 and the molten film, while the chill-roll 7 is rotating, preventing the formation of air bubbles that can jeopardize the correct contact between the molten plastic and the roll, thus ensuring the immediate solidification of the film as soon as the latter, in the molten state, comes into contact with the first chill-roll 7.

The chill-roll 7 that rotates at a high rate, also acts as a stretching element of the molten film leaving the mouth of the flat die, the lesser the final thickness required, the more the film is stretched.

Downstream of the above cooling and solidification section, the following units are preferably present, each already known per se in the state of the art:
- a measuring station of the thickness 11, known in itself in the state of the art, which sends signals to the thermal plugs 9 positioned on the flat extrusion die for regulating the thickness of the stretch film;
- a sliding or oscillation group 12 whose function is to level the surface of the solidified stretch film if there are sections of surface outside the thickness (cordons) that could cause undulations in the roll resulting from the winding of the film.

As indicated above, the regulation of the thickness of the stretch film is effected with methods already known per se in the art, for example by means of a closed ring feedback control: at the moment X, the thickness of the solidified film is read and on the basis of this reading a correction is effected on the thickness of the film that is leaving the extrusion die.

In addition, the following units, already known in the art, are present as essential units downstream of the cooling section:
- a winding unit 13 comprising cutting and weighing means for producing rolls having various weights, formats, dimensions, lengths, types;
- a roll discharge unit 14.

The plant is also equipped with an electric panel and control board, already known per se in the art in plants for the production of stretch film, in addition to the normal plant utilities (water pumping, management of side trimmings).

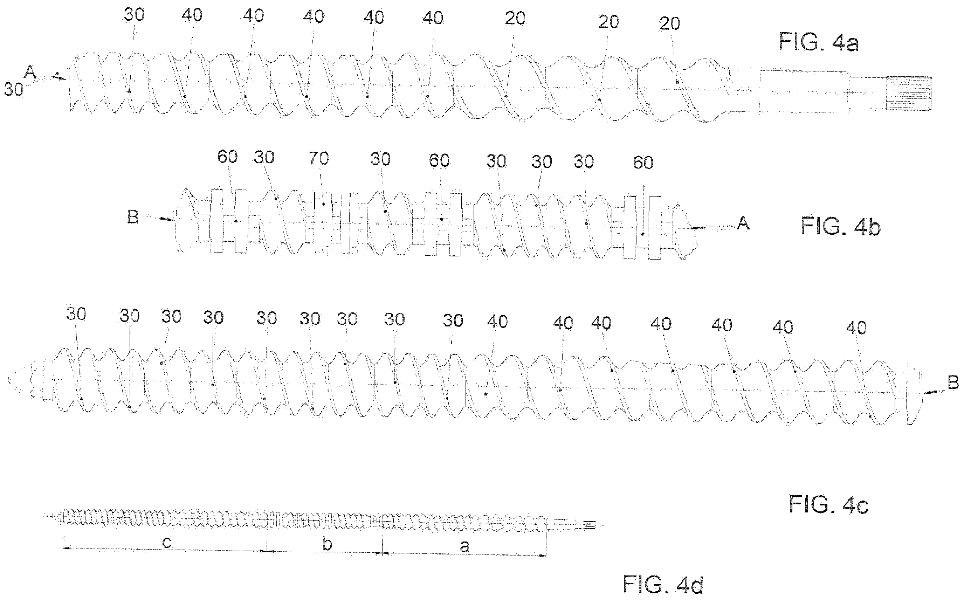

With reference to the twin-screw extruder used in the present plant, this preferably has a screw configuration as illustrated in figures 4a)-4d), in particular when it is fed with PE granules.

Each screw is advantageously composed of three distinct sections a), b), c).

The screws are composed of elements, the elements with threadings are indicated herein with reference numbers 20, 30, 40, whereas the mixing elements are indicated with reference numbers 60 and 70.

The first section a) is dedicated to transporting the material, the second section b) to mixing and the third section c) is destined for compressing and pumping the material and corresponds to the section indicated above with the initial L.

The diameter of the screws and cylinder remain constant along said section L: the thickening of the screw pitch in said section L ensures that the free volume between the cylinder and the screws decreases gradually towards the outlet, causing an increase in pressure.

In a preferred embodiment, the pumping length is equal to about 13 diameters, i.e. a much shorter length than that of a single-screw extruder.

## Claims

1. A plant (100) for the continuous production of rolls of plastic stretch film (50) starting from granules of one or more polymeric plastic materials, said plant comprising, in sequence, the following units:
an extrusion unit (80) of the cast extrusion type, in monoextrusion, comprising a flat extrusion die (6) and at least one extruder (2,3) positioned upstream of said flat extrusion die (6), to form a melt of said polymeric plastic materials,
a solidification unit of said melt comprising at least one chill-roll (7) with a continuous surface, positioned immediately downstream of said flat extrusion die (6) so as to solidify said melt, by cooling, to obtain said stretch film (50),
one or more winding units of the stretch film into rolls and discharging of said rolls produced,
wherein at least one of the extruders (2,3) of said polymeric plastic materials is a twin-screw extruder (2),
said twin-screw extruder (2) supplying the respective melt of polymeric plastic material with a pressure, in correspondence with the outlet mouth, which is such as to fill the parts of said plant positioned immediately downstream of said twin-screw extruder (2), wherein said pressure is such as to continuously feed said flat extrusion die (6) and a respective gear pump (5), positioned downstream of said twin-screw extruder (2) and upstream of said extrusion die (6),
**characterized in that** in said twin-screw extruder (2) each screw is composed of three distinct sections (a), b), c)), wherein a first section (a)) is dedicated to transporting the material, a second section (b)) is dedicated to mixing and a third section ((c)) is destined for compressing and pumping the polymeric plastic materials, wherein said screws are composed of elements with threadings (20, 30, 40) and mixing elements (60, 70),
wherein said twin-screw extruder (2) is provided with a final metering section (L) of the melt of said respective polymeric plastic material wherein the free volume between the cylinder and the profile of the screws of said twin-screw extruder (2) that occupy said section (L) decreases towards the outlet mouth of said twin-screw extruder (2) since the diameter of the threadings (30) and cylinder remain constant along said section L and then the decreasing of the screw pitch in said section (L) ensures that the free volume between the cylinder and the screws decreases gradually towards the outlet, so as to generate a pressure at the outlet mouth of said twin-screw extruder (2) which is such as to fill said parts of the plant positioned immediately downstream of said twin-screw extruder (2).

2. The plant according to claim 1, wherein when the stretch film (50) is multilayer, a feed-block distributing device is provided upstream of said flat extrusion die (6), suitable for dividing the melts of said polymeric plastic materials leaving said extruders (2,3) into the same number of streams as the layers forming the stretch film (50).

3. The plant according to any of the previous claims, wherein the extrusion unit (80) preferably also comprises at least one gravimetric dosing system (1) for feeding the granules of one or more polymeric plastic materials to the respective extruders (2,3).

4. The plant according to any of the previous claims, wherein a measuring unit of the thickness of the solidified stretch film (50) is provided, positioned downstream of the solidification station.

5. The plant according to any of the previous claims, wherein an oscillation unit is provided, positioned immediately upstream of said winding unit of the plastic stretch film (50) into rolls.

6. A process for the continuous production of rolls of plastic stretch film (50) starting from the extrusion of granules of one or more polymeric plastic materials, said process comprising at least the following steps:
extrusion by means of cast extrusion of said stretch film (50) through a flat extrusion die (6) fed by one or more extruders (2,3) of said granules, wherein at least one of the extruders (2,3) is a twin-screw extruder (2) which supplies the molten polymer with a pressure, at the outlet mouth, which is such as to fill the parts of the plant positioned immediately downstream of said twin-screw extruder (2);
cooling and solidification of said molten plastic film in correspondence with at least one chill-roll (7) so as to obtain a solidified plastic stretch film (50);
control of the thickness of the solidified stretch film (50) to keep said thickness constant with respect to the width of the stretch film (50);
treatment of the stretch film (50) by oscillation, in order to improve the aesthetical appearance of the rolls of stretch film (50) produced, **characterized in that** in said twin-screw extruder (2) each screw is composed of three distinct sections (a), b), c)), wherein a first section (a)) is dedicated to transporting the material, a second section (b)) is dedicated to mixing and a third section ((c)) is destined for compressing and pumping the polymeric plastic materials, wherein said screws are composed of elements with threadings (20, 30, 40) and mixing elements (60, 70),
and that said twin-screw extruder (2) is provided with a final metering in a section (L) of the melt of said respective polymeric plastic material wherein the free volume between the cylinder and the profile of the screws of said twin-screw extruder (2) that occupy said section (L) decreases towards the outlet mouth of said twin-screw extruder (2) since the diameter of the threadings (30) and cylinder remain constant along said section L and then the decreasing of the screw pitch in said section (L) ensures that the free volume between the cylinder and the screws decreases gradually towards the outlet, so as to generate a pressure at the outlet mouth of said twin-screw extruder (2) which is such as to fill said parts of the plant positioned immediately downstream of said twin-screw extruder (2).

7. Use of the plant according to any one of claims 1 to 5, comprising at least one twin-screw extruder (2) in the continuous production of rolls of continuous plastic stretch film (50), starting from the extrusion of granules of one or more polymeric plastic materials by means of cast extrusion, in said twin-screw extruder (2) each screw being composed of three distinct sections (a), b), c)), wherein a first section (a)) is dedicated to the transporting of the material, a second section (b)) is dedicated to mixing and a third section ((c)) is destined for compressing and pumping the polymeric plastic materials, wherein said screws are composed of elements with threadings (20, 30, 40) and mixing elements (60, 70) ,
and said twin-screw extruder (2) being provided with a final metering in a section (L) of the melt of said respective polymeric plastic material wherein the free volume between the cylinder and the profile of the screws of said twin-screw extruder (2) that occupy said section (L) decreases towards the outlet mouth of said twin-screw extruder (2) since the diameter of the threadings (30) and cylinder remain constant along said section L and then the decreasing of the screw pitch in said section (L) ensures that the free volume between the cylinder and the screws decreases gradually towards the outlet, so as to generate a pressure at the outlet mouth of said twin-screw extruder (2) which is such as to fill said parts of the plant positioned immediately downstream of said twin-screw extruder (2).

## Patentansprüche

1. Anlage (100) für die kontinuierliche Produktion von Rollen aus Kunststoffdehnfolie (50) beginnend aus Granulat eines oder mehrerer polymerer Kunststoffmaterialien, wobei die Anlage in Folge die folgenden Einheiten umfasst:
eine Extrusionseinheit (80) vom Extrusionsgießtyp in Monoextrusion, die eine flache Extrusionsmatrize (6) und zumindest einen Extruder (2, 3) umfasst, der stromaufwärts der flachen Extrusionsmatrize (6) positioniert ist, um eine Schmelze der polymeren Kunststoffmaterialien zu bilden,
eine Verfestigungseinheit der Schmelze, die zumindest eine Kühlrolle (7) mit einer kontinuierlichen Fläche umfasst, die unmittelbar stromabwärts der flachen Extrusionsmatrize (6) positioniert ist, um so durch Kühlung die Schmelze zu verfestigen und damit die Dehnfolie (50) zu erhalten,
eine oder mehrere Wickeleinheiten der Dehnfolie in Rollen und Austrag der erzeugten Rollen,
wobei zumindest einer der Extruder (2, 3) der polymeren Kunststoffmaterialien ein Doppelschraubenextruder (2) ist,
wobei der Doppelschraubenextruder (2) die jeweilige Schmelze von polymerem Kunststoffmaterial mit einem Druck entsprechend der Auslassmündung liefert, der so ausgelegt ist, dass die Teile der Anlage, die unmittelbar stromabwärts des Doppelschraubenextruders (2) positioniert sind, gefüllt werden, wobei der Druck so ausgelegt ist, dass die flache Extrusionsmatrize (6) und eine jeweilige Getriebepumpe (5) kontinuierlich gespeist werden, die stromabwärts des Doppelschraubenextruders (2) und stromaufwärts der Extrusionsmatrize (6) positioniert ist,
**dadurch gekennzeichnet, dass** bei dem Doppelschraubenextruder (2) jede Schraube aus drei separaten Abschnitten (a), b), c)) besteht, wobei ein erster Abschnitt (a)) zum Transport von Material bestimmt ist, ein zweiter Abschnitt (b)) zum Mischen bestimmt ist und ein dritter Abschnitt ((c)) zum Komprimieren und Pumpen der polymeren Kunststoffmaterialien bestimmt ist, wobei die Schrauben aus Elementen mit Gewinden (20, 30, 40) und Mischelementen (60, 70) bestehen,
wobei der Doppelschraubenextruder (2) mit einem Endzumessabschnitt (L) der Schmelze des jeweiligen polymeren Kunststoffmaterials versehen ist, wobei das freie Volumen zwischen dem Zylinder und dem Profil der Schrauben des Doppelschraubenextruders (2), die den Abschnitt (L) besetzen, zu der Auslassmündung des Doppelschraubenextruders (2) abnimmt, da der Durchmesser der Gewinde (30) und des Zylinders entlang des Abschnittes L konstant bleibt, und dann die Abnahme der Schraubenganghöhe in dem Abschnitt (L) sicherstellt, dass das freie Volumen zwischen dem Zylinder und den Schrauben allmählich zu dem Auslass abnimmt, um so einen Druck an der Auslassmündung des Doppelschraubenextruders (2) zu erzeugen, der so ausgelegt ist, dass die Teile der Anlage gefüllt werden, die sich unmittelbar stromabwärts des Doppelschraubenextruders (2) befinden.

2. Anlage nach Anspruch 1, wobei, wenn die Dehnfolie (50) ein Mehrschichtaufbau ist, eine Zufuhrblockverteilungsvorrichtung stromaufwärts der flachen Extrusionsmatrize (6) vorgesehen ist, die zum Teilen der Schmelzen der polymeren Kunststoffmaterialien, die die Extruder (2, 3) verlassen, in dieselbe Anzahl von Strömen wies die Schichten, die die Dehnfolie (50) bilden, geeignet ist.

3. Anlage nach einem der vorhergehenden Ansprüche, wobei die Extrusionseinheit (80) bevorzugt auch zumindest ein gravimetrisches Dosiersystem (1) zum Zuführen des Granulats eines oder mehrerer polymerer Kunststoffmaterialien zu den jeweiligen Extrudern (2, 3) umfasst.

4. Anlage nach einem der vorhergehenden Ansprüche, wobei eine Messeinheit der Dicke der verfestigten Dehnfolie (50) vorgesehen ist, die stromabwärts der Verfestigungsstation positioniert ist.

5. Anlage nach einem der vorhergehenden Ansprüche, wobei eine Oszillationseinheit vorgesehen ist, die unmittelbar stromaufwärts der Wickeleinheit der Kunststoffdehnfolie (50) in Rollen positioniert ist.

6. Prozess zur kontinuierlichen Erzeugung von Rollen aus Kunststoffdehnfolie (50) beginnend mit der Extrusion von Granulat einer oder mehrerer polymerer Kunststoffmaterialien, wobei der Prozess zumindest die folgenden Schritte umfasst:
Extrudieren mittels Extrusionsgießen der Dehnfolie (50) durch eine flache Extrusionsmatrize (6), die durch einen oder mehrere Extruder (2, 3) des Granulats gespeist wird, wobei zumindest einer der Extruder (2, 3) ein Doppelschraubenextruder (2) ist, der das geschmolzene Polymer mit einem Druck an der Auslassmündung liefert, der so ausgelegt ist, dass die Teile der Anlage gefüllt werden, die unmittelbar stromabwärts des Doppelschraubenextruders (2) positioniert sind;
Kühlen und Verfestigen der geschmolzenen Kunststofffolie entsprechend zumindest einer Kühlrolle (7), um so eine verfestigte Kunststoffdehnfolie (50) zu erhalten;
Steuern der Dicke der verfestigten Dehnfolie (50), um die Dicke in Bezug auf die Breite der Dehnfolie (50) konstant zu halten;
Behandeln der Dehnfolie (50) durch Oszillation, um das ästhetische Aussehen der Rollen der erzeugten Dehnfolie (50) zu verbessern, **dadurch gekennzeichnet, dass** bei dem Doppelschraubenextruder (2) jede Schraube aus drei separaten Abschnitten (a), b), c)) besteht, wobei ein erster Abschnitt (a)) zum Transport des Materials bestimmt ist, ein zweiter Abschnitt (b)) zum Mischen bestimmt ist und ein dritter Abschnitt ((c)) zum Komprimieren und Pumpen der polymeren Kunststoffmaterialien bestimmt ist, wobei die Schrauben aus Elementen mit Gewinden (20, 30, 40) und Mischelementen (60, 70) bestehen,
und dass der Doppelschraubenextruder (2) mit einer Endzumessung in einem Abschnitt (L) der Schmelze des jeweiligen polymeren Kunststoffmaterials versehen ist, wobei das freie Volumen zwischen dem Zylinder und dem Profil der Schrauben des Doppelschraubenextruders (2), die den Abschnitt (L) besetzen, zu der Auslassmündung des Doppelschraubenextruders (2) abnimmt, da der Durchmesser der Gewinde (30) und des Zylinders entlang des Abschnitts L konstant bleibt, und dann die Abnahme des Schraubenganghöhe in dem Abschnitt (L) sicherstellt, dass das freie Volumen zwischen dem Zylinder und den Schrauben allmählich zu dem Auslass abnimmt, um so einen Druck an der Auslassmündung des Doppelschraubenextruders (2) zu erzeugen, der so ausgelegt ist, dass die Teile der Anlage gefüllt werden, die unmittelbar stromabwärts des Doppelschraubenextruders (2) positioniert sind.

7. Verwendung der Anlage nach einem der Ansprüche 1 bis 5, umfassend:
zumindest einen Doppelschraubenextruder (2) bei der kontinuierlichen Produktion von Rollen aus kontinuierlicher Kunststoffdehnfolie (50) beginnend mit der Extrusion von Granulat eines oder mehrerer polymerer Kunststoffmaterialien mittels Extrusionsgießen, wobei in dem Doppelschraubenextruder (2) jede Schraube aus drei separaten Abschnitten (a), b) c)) besteht, wobei ein erster Abschnitt (a)) zum Transport des Materials bestimmt ist, ein zweiter Abschnitt (b)) zum Mischen bestimmt ist und ein dritter Abschnitt ((c)) zum Komprimieren und Pumpen der polymeren Kunststoffmaterialien bestimmt ist, wobei die Schrauben aus Elementen mit Gewinden (20, 30, 40) und Mischelementen (60, 70) bestehen,
und wobei der Doppelschraubenextruder (2) mit einer Endzumessung in einem Abschnitt (L) der Schmelze des jeweiligen polymeren Kunststoffmaterials versehen ist, wobei das freie Volumen zwischen dem Zylinder und dem Profil der Schrauben des Doppelschraubenextruders (2), die den Abschnitt (L) belegen, in Richtung der Auslassmündung des Doppelschraubenextruders (2) abnimmt, da der Durchmesser der Gewinde (30) und des Zylinders entlang des Abschnitts L konstant bleibt, und dann die Abnahme der Schraubenganghöhe in dem Abschnitt (L) sicherstellt, dass das freie Volumen zwischen dem Zylinder und den Schrauben allmählich zu dem Auslass abnimmt, um so einen Druck an der Auslassmündung des Doppelschraubenextruders (2) zu erzeugen, der so ausgelegt ist, dass die Teile der Anlage gefüllt werden, die unmittelbar stromabwärts des Doppelschraubenextruders (2) positioniert sind.

## Revendications

1. Installation (100) pour la production continue de rouleaux de film étirable en plastique (50) démarrant à partir de granules d'un ou plusieurs matériaux de plastique polymère, ladite installation comprenant, de manière séquentielle, les unités suivantes :
une unité d'extrusion (80) du type extrusion par coulée, en mono-extrusion, comprenant une filière d'extrusion à plat (6) et au moins une extrudeuse (2, 3) positionnée en amont de ladite filière d'extrusion à plat (6), pour former une fusion desdits matériaux de plastique polymère,
une unité de solidification de ladite fusion comprenant au moins un rouleau refroidisseur (7) ayant une surface continue, positionnée juste en aval de ladite filière d'extrusion à plat (6) de manière à solidifier ladite fusion, par refroidissement, afin d'obtenir ledit film étirable (50),
une ou plusieurs unités d'enroulement du film étirable en rouleaux et de rejet desdits rouleaux produits,
dans laquelle au moins une des extrudeuses (2, 3) desdits matériaux de plastique polymère est une extrudeuse à deux vis (2),
ladite extrudeuse à deux vis (2) apportant la fusion respective de matériau de plastique polymère avec une pression, en correspondance avec l'embouchure de sortie, qui est telle qu'elle remplit les parties de ladite installation positionnées juste en aval de ladite extrudeuse à deux vis (2), dans laquelle ladite pression est telle qu'elle alimente en continu ladite filière d'extrusion à plat (6) et une pompe à engrenages (5) respective, positionnée en aval de ladite extrudeuse à deux vis (2) et en amont de ladite filière d'extrusion (6),
**caractérisée en ce que** dans ladite extrudeuse à deux vis (2) chaque vis est composée de trois sections distinctes (a), b), c)), dans laquelle une première section (a)) est dédiée au transport du matériau, une deuxième section (b)) est dédiée au mélange et une troisième section ((c)) est destinée à la compression et au pompage des matériaux de plastique polymère, dans laquelle lesdites vis sont composées d'éléments présentant des filetages (20, 30, 40) et des éléments de mélange (60, 70),
dans laquelle ladite extrudeuse à deux vis (2) est pourvue d'une section de mesure finale (L) de la fusion dudit matériau de plastique polymère respectif dans laquelle le volume libre entre le cylindre et le profil des vis de ladite extrudeuse à deux vis (2) qui occupent ladite section (L) diminue vers l'embouchure de sortie de ladite extrudeuse à deux vis (2) étant donné que le diamètre des filetages (30) et du cylindre restent constants le long de ladite section L puis la diminution du pas de vis dans ladite section (L) garantit que le volume libre entre le cylindre et les vis diminue progressivement vers la sortie, de manière à générer une pression au niveau de l'embouchure de sortie de ladite extrudeuse à deux vis (2) qui est telle qu'elle remplit lesdites parties de l'installation positionnées juste en aval de ladite extrudeuse à deux vis (2).

2. Installation selon la revendication 1, dans laquelle, lorsque le film étirable (50) est multicouche, un dispositif de distribution de bloc d'alimentation est prévu en amont de ladite filière d'extrusion à plat (6), approprié pour diviser les fusions desdits matériaux de plastique polymère quittant lesdites extrudeuses (2, 3) en le même nombre de flux que les couches formant le film étirable (50).

3. Installation selon l'une quelconque des revendications précédentes, dans laquelle l'unité d'extrusion (80) comprend également de préférence au moins un système de dosage gravimétrique (1) pour acheminer les granules d'un ou plusieurs matériaux de plastique polymère jusqu'aux extrudeuses (2, 3) respectives.

4. Installation selon l'une quelconque des revendications précédentes, dans laquelle une unité de mesure de l'épaisseur du film étirable solidifié (50) est prévue, positionnée en aval du poste de solidification.

5. Installation selon l'une quelconque des revendications précédentes, dans laquelle une unité d'oscillation est prévue, positionnée juste en amont de ladite unité d'enroulement du film étirable en plastique (50) en rouleaux.

6. Processus pour la production continue de rouleaux de film étirable en plastique (50) démarrant à partir de l'extrusion de granules d'un ou plusieurs matériaux de plastique polymère, ledit processus comprenant au moins les étapes suivantes :
extrusion par extrusion par coulée dudit film étirable (50) à travers une filière d'extrusion à plat (6) alimentée par une ou plusieurs extrudeuses (2, 3) desdites granules, dans lequel au moins une des extrudeuses (2, 3) est une extrudeuse à deux vis (2) qui apporte le polymère fondu avec une pression, au niveau de l'embouchure de sortie, qui est telle qu'elle remplit les parties de l'installation positionnées juste en aval de ladite extrudeuse à deux vis (2) ;
refroidissement et solidification dudit film en plastique fondu en correspondance avec au moins un rouleau refroidisseur (7) de manière à obtenir un film étirable en plastique solidifié (50) ;
commande de l'épaisseur du film étirable solidifié (50) pour maintenir ladite épaisseur constante par rapport à la largeur du film étirable (50) ;
traitement du film étirable (50) par oscillation, afin d'améliorer l'aspect esthétique des rouleaux de film étirable (50) produits, **caractérisé en ce que** dans ladite extrudeuse à deux vis (2) chaque vis est composée de trois sections distinctes (a), b), c)), dans laquelle une première section (a)) est dédiée au transport du matériau, une deuxième section (b)) est dédiée au mélange et une troisième section ((c)) est destinée à la compression et au pompage des matériaux de plastique polymère, dans lequel lesdites vis sont composées d'éléments présentant des filetages (20, 30, 40) et des éléments de mélange (60, 70),
et **en ce que** ladite extrudeuse à deux vis (2) est pourvue d'une mesure finale dans une section (L) de la fusion dudit matériau de plastique polymère respectif dans lequel le volume libre entre le cylindre et le profil des vis de ladite extrudeuse à deux vis (2) qui occupent ladite section (L) diminue vers l'embouchure de sortie de ladite extrudeuse à deux vis (2) étant donné que le diamètre des filetages (30) et du cylindre restent constants le long de ladite section L puis la diminution du pas de vis dans ladite section (L) garantit que le volume libre entre le cylindre et les vis diminue progressivement vers la sortie, de manière à générer une pression au niveau de l'embouchure de sortie de ladite extrudeuse à deux vis (2) qui est telle qu'elle remplit lesdites parties de l'installation positionnées juste en aval de ladite extrudeuse à deux vis (2).

7. Utilisation de l'installation selon l'une quelconque des revendications 1 à 5, comprenant au moins une extrudeuse à deux vis (2) dans la production continue de rouleaux de film étirable en plastique continus (50), démarrant à partir de l'extrusion de granules d'un ou plusieurs matériaux de plastique polymère par extrusion par coulée, dans ladite extrudeuse à deux vis (2) chaque vis étant composée de trois sections distinctes (a), b), c)), dans laquelle une première section (a)) est dédiée au transport du matériau, une deuxième section (b)) est dédiée au mélange et une troisième section ((c)) est destinée à la compression et au pompage des matériaux de plastique polymère, dans laquelle lesdites vis sont composées d'éléments présentant des filetages (20, 30, 40) et des éléments de mélange (60, 70),
et ladite extrudeuse à deux vis (2) étant pourvue d'une mesure finale dans une section (L) de la fusion dudit matériau de plastique polymère respectif dans laquelle le volume libre entre le cylindre et le profil des vis de ladite extrudeuse à deux vis (2) qui occupent ladite section (L) diminue vers l'embouchure de sortie de ladite extrudeuse à deux vis (2) étant donné que le diamètre des filetages (30) et du cylindre restent constants le long de ladite section L puis la diminution du pas de vis dans ladite section (L) garantit que le volume libre entre le cylindre et les vis diminue progressivement vers la sortie, de manière à générer une pression au niveau de l'embouchure de sortie de ladite extrudeuse à deux vis (2) qui est telle qu'elle remplit lesdites parties de l'installation positionnées juste en aval de ladite extrudeuse à deux vis (2).
